# DEMANDE DE BREVET EUROPEEN

(11) **EP 0 568 409 A1**
(43) Date de publication de la demande: **03.11.1993**
(21) Numéro de dépôt: 93401003.4
(22) Date de dépôt: 16.04.1993
(51) Int. Cl.: E05F 11/38, E05F 11/48

(54) **Dispositif de liaison entre une vitre et une mécanisme d'entraînement de lève-vitre à câble dans une portière de véhicule**

(30) Priorité: 27.04.1992 FR 9205175
(71) Demandeur: ROCKWELL BODY AND CHASSIS SYSTEMS - FRANCE, en abrégé: ROCKWELL BCS - FRANCE, F-92082 Paris La Défense 2 (FR)
(72) Inventeur: Pebre, Thierry, F-45430 Checy (FR)
(74) Mandataire: Martin, Jean-Paul

(57) **Abrégé**

Ce dispositif comprend un palier (3) support de la vitre (1), un pion (6) traversant ce palier de part en part et fixé au chariot (2) du mécanisme d'entraînement, et des moyens de verrouillage du palier sur le pion, comportant une pièce élastique (7) adaptée pour être encliquetée sur le palier avant introduction du pion dans ce dernier, et pour pincer le pion afin de le fixer au palier. La pièce (7) est un clip comportant deux bras (8) pouvant s'écarter élastiquement de chaque côté d'un trou central (5) de passage du pion (6) ménagé dans le palier (3), des saignées (11) étant formées dans le palier pour recevoir chacune un bras du clip (7). Cet agencement permet de préassembler le clip de verrouillage au palier support de vitre, avant introduction du pion (6), et par conséquent évite de devoir monter le clip "en aveugle" dans la portière, comme jusqu'à présent, avec des risques de montage défectueux ou de perte de la pièce de verrouillage.

## Description

La présente invention a pour objet un dispositif de liaison entre une vitre et un mécanisme d'entraînement de lève-vitre à câble, notamment du type câble et tambour, dans une portière de véhicule.

Un dispositif de liaison connu comprend un palier support de vitre, inséré dans un trou de celle-ci, un pion traversant ce palier de part en part et fixé à un chariot du mécanisme d'entraînement, et des moyens de verrouillage du palier sur le pion. Ces moyens sont constitués par une plaquette percée d'un orifice qui peut être traversé par le nez du pion, le contour de cet orifice venant s'encliqueter dans une gorge du pion afin de maintenir le palier solidarisé avec ce dernier. Le palier étant mis en place dans le trou correspondant de la vitre, on introduit le pion du chariot à travers le palier puis on monte la pièce de verrouillage sur le nez du pion, qui fait saillie par rapport au palier. La mise en place de la pièce de verrouillage s'effectue manuellement à l'intérieur de la portière, pratiquement en "aveugle" donc par tâtonnement, et de ce fait est assez malaisée. Il peut arriver que l'opérateur laisse tomber la pièce à l'intérieur de la portière, dans laquelle elle ne peut alors plus être récupérée avant la livraison du véhicule, ou bien que cette pièce de verrouillage se détache ultérieurement, consécutivement à un montage défectueux.

L'invention a donc pour but de réaliser un dispositif du type précité, agencé de manière que la pièce de verrouillage puisse être préassemblée sur le palier avant l'introduction de ce dernier et de la vitre dans la portière, et avant mise en place du pion dans le palier.

Conformément à l'invention, les moyens de verrouillage comportent une pièce élastique encliquetée sur le palier avant introduction du pion dans ce dernier, et adaptée pour pincer le pion afin de le fixer au palier.

Suivant une forme de réalisation de l'invention, la pièce de verrouillage est une pince comportant deux bras pouvant s'écarter élastiquement l'un de l'autre de chaque côté du palier, dans lequel sont ménagées, de chaque côté d'un passage central pour le pion, des saignées adaptées pour recevoir chacune un bras de la pince.

On comprend donc que cet agencement permette de prémonter la pince élastique, formant "clip", sur le palier avant introduction dans ce dernier du pion du chariot du lève-vitre, grâce à une adaptation mutuelle du palier et de la pince de verrouillage. On évite ainsi le montage manuel "en aveugle" à l'intérieur de la portière, et donc les inconvénients mentionnés ci-dessus.

D'autres particularités et avantages de l'invention apparaitront au cours de la description qui va suivre, faite en référence aux dessins annexés qui en illustrent plusieurs formes de réalisation à titre d'exemples non limitatifs.

La figure 1 est une vue mi-coupe verticale mi-élévation, à l'échelle, d'une première forme de réalisation du dispositif de liaison entre une vitre et un mécanisme d'entraînement de lève-vitre à câble dans une portière de véhicule, suivant 1-1 de la Fig.2.

La figure 2 est une vue en coupe verticale et élévation partielle suivant 2-2 de la Fig.1.

La figure 3 est une vue de dessus en plan du dispositif des Fig. 1 et 2.

La figure 4 est une vue en élévation, du côté de la pince de verrouillage, d'une seconde forme de réalisation du dispositif de liaison selon l'invention.

La figure 5 est une vue mi-coupe verticale mi-élévation suivant 5/5 de la Fig.4.

La figure 6 est une vue en élévation, du côté de la pince de verrouillage, d'une troisième forme de réalisation du dispositif selon l'invention.

La figure 7 est une vue de dessus avec arrachement du dispositif de la Fig.6.

La figure 8 est une vue en élévation latérale de la pince de verrouillage des Fig.6 et 7.

La figure 9 est une vue en élévation d'une quatrième forme de réalisation du dispositif selon l'in-vention.

La figure 10 est une vue de dessus du pion et de la pince de verrouillage du dispositif de la Fig.9.

La figure 11 est une vue en élévation latérale et coupe partielle du dispositif de la Fig.9.

La figure 12 est une vue en élévation frontale, du côté de la pince de verrouillage, d'une cinquième forme de réalisation du dispositif selon l'invention.

La figure 13 est une vue en élévation latérale et coupe partielle du dispositif de la Fig.12.

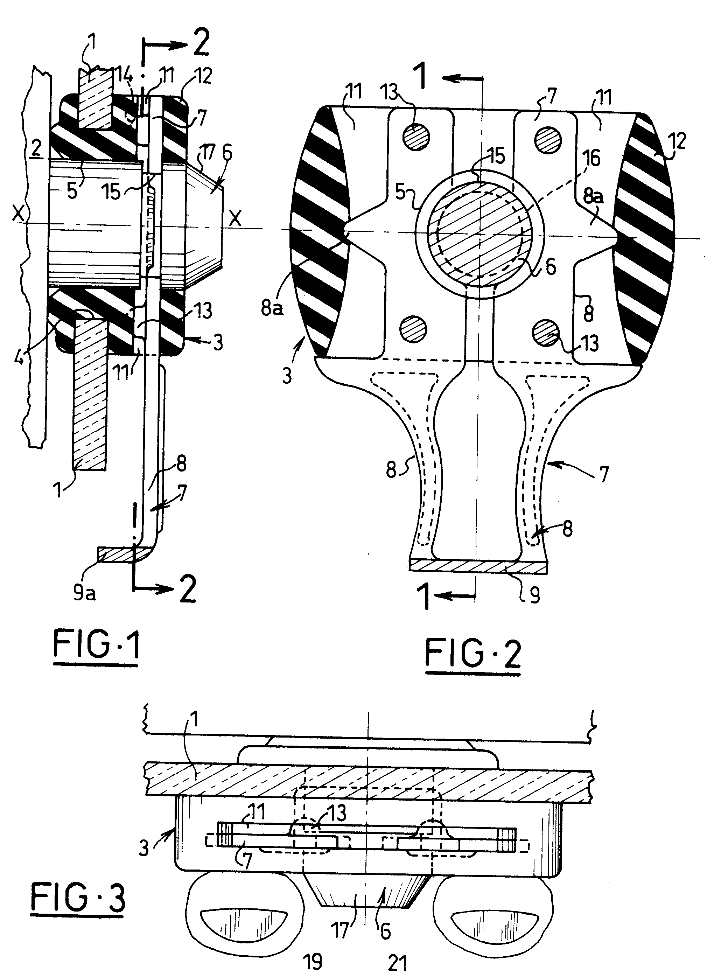

Le dispositif représenté aux Fig.1 à 3 est adapté pour assurer une liaison entre une vitre 1 d'une porte latérale non représentée d'un véhicule automobile, et un chariot 2 d'un mécanisme d'entraînement, connu en soi et non représenté, d'un lève-vitre à câble et tambour ou tout autre système de guidage de vitre par un rail et un chariot.

Ce dispositif comprend un palier 3, réalisé en une matière compressible élastique telle que le caoutchouc, dimensionné pour pouvoir être introduit dans un trou 4 de la vitre 1 et présentant une gorge de réception du bord de la vitre 1 délimitant le trou 4. Dans le palier 3 est ménagé un trou axial 5 qui le perce de part en part et qui est adapté pour recevoir un pion 6 fixé au chariot 2 du lève-vitre, assurant l'accouplement de la vitre 1 au chariot 2.

Le dispositif de liaison comporte des moyens de verrouillage du palier 3 sur le pion 6. Dans le mode de réalisation des Fig.1 à 3, ces moyens de verrouillage comprennent une pince 7 pourvue de deux bras ou pattes 8 réunis à l'une de leurs extrémités par un raccord transversal 9 et pouvant s'écarter élastiquement l'un de l'autre, de chaque côté du trou central 5 de passage du pion 6. Dans le palier 3 sont ménagées, de part et d'autre du trou 5 et donc du pion 6, des saignées 11, s'étendant perpendiculairement à l'axe XX du pion 6 et limitées, du côté opposé au trou 5, par des fonds 12 formant butées de retenue transversale pour les bras 8. Dans l'exemple décrit, chacun de ces derniers est pourvu d'une excroissance 8a venant en appui sur le fond 12 correspondant formant butée, qui maintient les bras 8 sous une légère contrainte, dans la position représentée à la Fig.2. Chacun des bras 8 est pourvu, sur sa face tournée vers la vitre 1, de picots 13 par exemple au nombre de deux par branche 8, pouvant venir en appui dans des cavités correspondantes 14 des saignées 11.

Dans le pion 6, en regard des saignées 11, est ménagée une gorge 15 dans laquelle peuvent venir s'encliqueter élastiquement les bords en vis-à-vis des bras 8, dans lesquels sont ménagées des échancrures circulaires 16 de même diamètre que celui de la gorge 15. Enfin sur le nez du pion 6 est formé un chanfrein annulaire 17 d'inclinaison convenable sur l'axe XX, par exemple 30°, et le raccord 9 de la pince 7 se prolonge, en direction du chariot 2, par une patte 9a.

Le montage du dispositif qui vient d'être décrit s'effectue de la manière suivante.

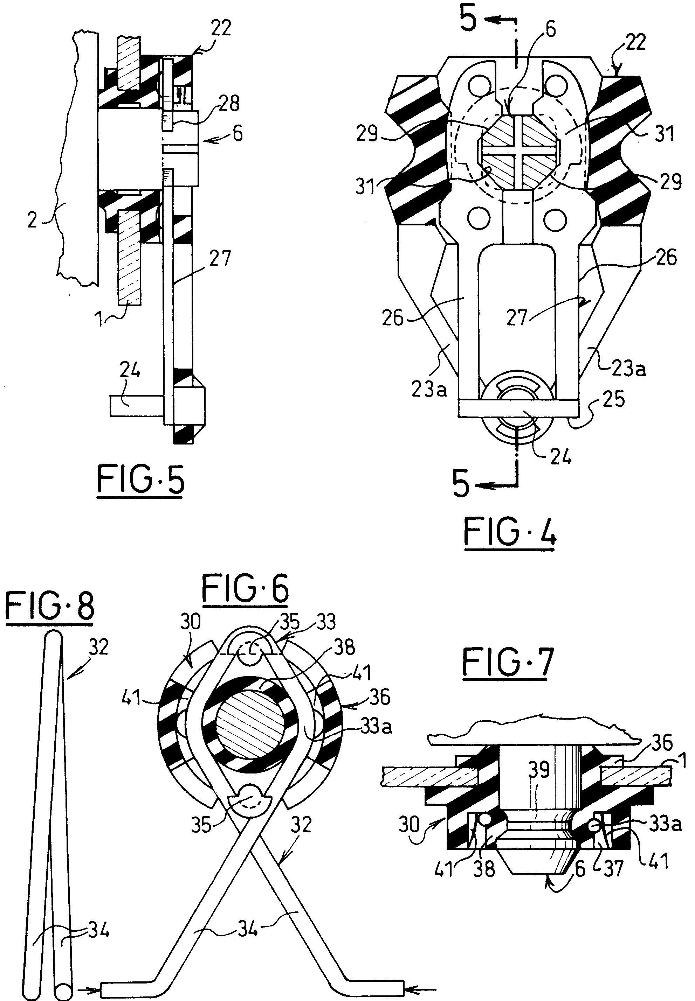

Tout d'abord on introduit le palier 3 dans le trou 5 agencé à la base de la vitre 1. En second lieu, on pré-assemble le clip ou pince élastique 7 au palier 3, en écartant les deux branches 8 l'une de l'autre afin de pouvoir les introduire dans les saignées latérales respectives ou fentes 11. Cet encliquetage des bras 8 dans les saignées 11 et la gorge 15 est assuré par simple pression manuelle de deux doigts 19, 21 (Fig.3). Dans les fentes 11, les bras 8 prennent la position représentée à la Fig.2, avec leurs bossages 8a en butée contre les fonds 12. Les picots 13 viennent en légère contrainte dans le palier souple 3 et facilitent l'encliquetage.

Ce prémontage de la pince 7 sur le palier 3 s'exécute en dehors de la portière, donc sans aucune difficulté. Après quoi la vitre, son palier et la pince 7 sont introduits dans la portière.

Enfin, on approche le chariot 2 jusqu'à faire pénétrer son pion 6 dans le trou 5. Le chanfrein 17 facilite l'introduction du pion 6 entre les branches 8, qui glissent sur le chanfrein en s'écartant de chaque côté. Lorsque le pion 6 a complètement traversé le palier 3, les branches 8 sont au niveau de la gorge 15 dans laquelle elles viennent s'encliqueter élastiquement, tout en étant maintenues sous légère contrainte par les butées latérales 12. L'accouplement entre la vitre 1 et le chariot 2 est alors terminé.

Le clip 7 peut être désaccouplé aisément par extraction manuelle, celle-ci étant facilitée par la patte inférieure 9a.

Dans la forme de réalisation représentée aux Fig.4 et 5, le palier 22 est prolongé par un étrier 23 constitué de deux branches 23a en V, dans le sommet duquel est agencée une ouverture de passage d'une goupille 24 portée par le raccord transversal 25 reliant les deux bras 26 de la pince élastique 27.

Cet agencement permet de retenir la pince 27 au palier 22 après désaccouplement de celui-ci et du pion 6. Dans le nez de ce dernier est ménagée une gorge 28 non plus circulaire comme dans la réalisation précédente, mais constituée par une succession de quatre méplats 29 délimitant un carré dont les sommets sont tronqués. Complémentairement les bords en vis-à-vis des bras 26 présentent, au niveau de la gorge 28, des plats 31 adaptés pour pouvoir venir se placer en appui sur les méplats 29 quand le pion 6 est convenablement orienté autour de son axe.

Dans la troisième forme de réalisation de l'invention représentée aux Fig.6 à 8, la pince élastique est constituée par un fil métallique 32 plié de manière à former une épingle présentant une boucle 33 sensiblement en forme de losange, prolongée par deux brins libres divergents 34 de préhension manuelle. La boucle 33 est adaptée pour pouvoir venir se loger dans des saignées 37 débouchant sur la face du palier 36 adjacente au nez chanfreiné du pion 6. Plus précisément les côtés 33a de la boucle 33 viennent entourer un collet 38 du palier 36, qui emplit une gorge 39 agencée dans le pion 6, le profil intérieur du collet 38 étant conjugué de celui de la gorge 39 (Fig.7).

Les côtés 33a de la boucle 33 serrent élastiquement le collet 38 sur le pion 6. Aux extrémités supérieure et inférieure, la boucle 33 s'appuie sur des proéminences 35 du palier 36. Les côtés 33a sont serrés au fond des saignées 37 entre le collet 38 et des nervures déformables 41 du palier 36.

Dans ce mode de réalisation, l'assemblage du palier 36 au pion 6 est d'abord assuré par le collet 38 convenablement profilé pour remplir la gorge 39, et la solidité de cet assemblage est renforcée par le serrage des côtés élastiques 33a de la boucle 33.

Pour mettre en place l'épingle 32, on rapproche l'une de l'autre les pa: ties terminales 34 en appuyant sur leurs extrémités (flèches sur la Fig.6), afin d'agrandir la boucle 33. On met en place cette dernière dans les saignées 37 en poussant les côtés 33a jusqu'à leur position de la Fig.7, puis on relâche les extrémités 34, dont la précontrainte exerce un serrage élastique du collet 38 entre les côtés 33a.

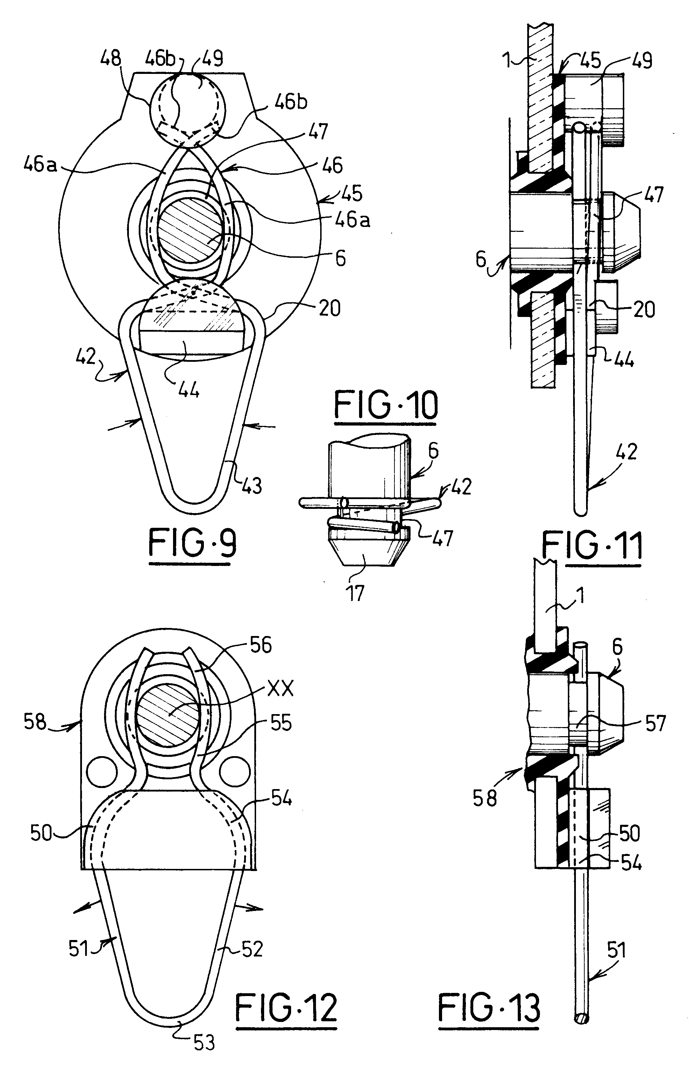

Dans le quatrième mode de réalisation de l'invention représenté aux Fig.9 à 11, la pince 42 est constituée par un fil métallique plié de manière à délimiter une première boucle 43 pouvant prendre appui, sur une saillie d'accrochage 44 correspondante du palier 45, dans des saignées 20 du palier 45 délimitant la saillie 44 et une seconde boucle 46, plus petite que la boucle 43. Les côtés 46a de la boucle 46 viennent serrer élastiquement le fond de la gorge 47 du pion 6, et sont prolongés par des extrémités libres 46b, qui se croisent et s'appuient dans un dégagement 48 formé à la partie supérieure du palier 45. Ce dégagement 48 est délimité d'un côté par un plot 49, les extrémités libres 46b étant interposées entre ce plot et la paroi du dégagement 48. Compte tenu que les deux bras élastiques 46a sont logés dans la gorge 47 avec un léger décalage axial, visible à la Fig.11, la largeur de la gorge 47 doit être supérieure à celle des gorges 15, 28, 39 des autres modes de réalisation décrits.

L'épingle 42 peut être mise en place sur le palier 45, ou extraite de celui-ci, par pression sur les deux brins de sa grande boucle 43, suivant les flèches portées sur la Fig.9, ce qui a pour effet d'écarter l'un de l'autre les brins 46a et leurs extrémités 46b. L'épingle de verrouillage ainsi réalisée est "imperdable" une fois placée dans les saignées 20 dans sa position d'encliquetage, représentée aux Fig.9 à 11, et ce en raison de la précontrainte de ses brins.

Enfin dans la forme de réalisation des Fig.12 et 13, la pince 51 est également constituée par un fil métallique plié mais de telle manière qu'il forme deux boucles incomplètes ou ouvertes,en raison de la suppression des croisements au niveau des extrémités des deux boucles 43 et 46 de la réalisation des Fig.9 à 11. Ainsi, dans ce mode d'exécution, la pince de verrouillage 51 comporte une première grande boucle 52 constituée, de chaque côté de leur partie arrondie 53 de liaison, par un brin rectiligne suivi d'un tronçon arrondi 54. Ces derniers convergent l'un vers l'autre puis forment un coude 55 suivi d'un brin terminal 56 convenablement incurvé pour pouvoir se loger dans une gorge 57 du pion 6. Les brins curvilignes 54 sont reçus dans des saignées latérales 50 ménagées dans le palier 58 sur la face duquel elles s'ouvrent, pour permettre l'introduction des brins 54. Ces derniers exercent donc un serrage élastique sur les flancs intérieurs des saignées 50, grâce auquel la pince 51 peut être préassemblée au palier 58, avant insertion du pion 6 entre les brins 56 de serrage reçus dans la gorge 57, en assurant ainsi le verrouillage du palier 58 au pion 6.

Le montage et le démontage de la pince 51 s'effectuent en écartant l'un de l'autre les brins de la grande boucle 52, en exerçant sur ceux-ci des tractions de sens opposés comme représenté par les flèches portées sur la Fig.12.

L'invention n'est pas limitée aux modes de réalisation décrits et peut comporter de nombreuses variantes d'exécution, les formes et géométries des pinces de verrouillage pouvant très largement varier, de même que les agencements des paliers correspondants.

## Revendications

1. Dispositif de liaison entre une vitre (1) et un mécanisme (2) d'entraînement de lève-vitre à câble dans une portière de véhicule, comprenant un palier (3..) support de vitre, un pion (6) traversant ce palier de part en part et fixé audit mécanisme d'entraînement, et des moyens de verrouillage du palier sur le pion, caractérisé en ce que lesdits moyens de verrouillage comportent une pièce élastique (7; 27; 32...) adaptée pour être encliquetée sur le palier avant introduction du pion dans ce dernier, et adaptée pour pincer le pion afin de le fixer au palier.

2. Dispositif selon la revendication 1, caractérisé en ce que la pièce de verrouillage est une pince (7) comportant deux bras (8) pouvant s'écarter élastiquement l'un de l'autre de chaque côté d'un trou central (5) de passage du pion (6) ménagé dans le palier (3), des saignées (11) étant formées dans le palier pour recevoir chacune un bras de la pince (Fig.1 à 3).

3. Dispositif selon la revendication 2, caractérisé en ce que dans le pion (6) est formée une gorge (15) dans laquelle peuvent s'encliqueter les bras élastiques (8) de la pince (7).

4. Dispositif selon la revendication 2 ou 3, caractérisé en ce que des butées latérales (12) de limitation de l'écartement des bras élastiques (8) sont prévues sur le palier (3).

5. Dispositif selon la revendication 2, caractérisé en ce que le palier (22), réalisé en un matériau élastique, est prolongé par un étrier (23a) apte à être solidarisé avec une extrémité de la pince de verrouillage (27), afin de retenir cette dernière lorsqu'elle est désaccouplée du palier et du pion (6) (Fig.4 et 5).

6. Dispositif selon la revendication 2, caractérisé en ce que la pince est constituée par un fil métallique plié de manière à former une épingle (32) présentant une boucle (33) prolongée par deux brins libres (34) divergents de préhension, la boucle étant adaptée pour pouvoir être insérée dans des saignées (37) du palier (36) en entourant un collet (38) du palier (36), et ce collet emplit une gorge (39) du pion (6), de sorte que la boucle (33) serre élastiquement le collet sur le pion en renforçant ainsi la solidarisation de ce dernier avec le palier (Fig.6 et 8).

7. Dispositif selon la revendication 2, caractérisé en ce que la pince (42) est constituée par un fil métallique plié de manière à délimiter une première boucle (43) pouvant prendre appui dans les saignées (20) sur une saillie (44) d'accrochage correspondante du palier (45), et une seconde boucle (46) pouvant serrer élastiquement le pion (6), cette seconde boucle étant prolongée par des extrémités libres (46b) qui s'appuient dans un dégagement (48) du palier (Fig.9 à 11).

8. Dispositif selon la revendication 7, caractérisé en ce que les bras (43, 46) du fil métallique forment soit deux boucles croisées au niveau de leurs extrémités (Fig.9-11), soit des boucles ouvertes incomplètes (52, 56) (Fig.12-13).

9. Dispositif selon l'une quelconque des revendications 2 à 8, caractérisé en ce que le pion (6) comporte un nez sur lequel est ménagé un chanfrein annulaire (17).

10. Dispositif selon la revendication 2, caractérisé en ce que le fond de la gorge (28) comporte des méplats (29) sur lesquels peut venir s'encliqueter un profil conjugué (31) des bords en vis-à-vis des bras élastiques (26) de la pince (27) (Fig.4).
